Europäisches Patentamt

European Patent Office

Office européen des brevets

(19)

(11) Veröffentlichungsnummer: **0 143 154**
**A1**

(12) **EUROPÄISCHE PATENTANMELDUNG**

(21) Anmeldenummer: 84106276.3

(22) Anmeldetag: 01.06.84

(51) Int. Cl.⁴: **B 29 C 47/00,** B 29 C 39/14

(30) Priorität: 01.07.83 DE 3323817

(71) Anmelder: **Windmöller & Hölscher,
Münsterstrasse 48-52, D-4540 Lengerich i.W. (DE)**

(43) Veröffentlichungstag der Anmeldung: 05.06.85
**Patentblatt 85/23**

(72) Erfinder: **Dellbrügge, Herbert, Wüstenei13,
D-4540 Lengerich (DE)**

(74) Vertreter: **Lorenz, Eduard et al, Rechtsanwälte Lorenz,
Eduard - Seidler, Bernhard Seidler, Margrit - Gossel,
Hans-K. Philipps, Ina, Dr. Widenmayerstrasse 23,
D-8000 München 22 (DE)**

(84) Benannte Vertragsstaaten: **AT CH FR GB IT LI**

(54) **Vorrichtung zum Abstützen und Kalibrieren von Folienschläuchen aus thermoplastischem Kunststoff.**

(57) Zum Abstützen und Kalibrieren von Blasfolien oberhalb der Erstarrungslinie ist es erforderlich, den zu einer Folienblase aufgeblasenen Folienschlauch von außen mit ringförmigen Stützelementen zu umschließen. Um den aufgeblasenen Folienschlauch berührungslos abstützen zu können, bestehen die Stützelemente aus U-förmigen, mit nach innen offenen Ringkanälen (5) versehenen Ringen (2), die Anschlüsse (7) zum Zuführen von Kühlluft aufweisen. Der Durchmesser der inneren Ränder (13, 14) der seitlich den Ringkanal (5) begrenzenden Flanken (3, 4) der Ringe (2) ist dem zu kalibrierenden Durchmesser des Folienschlauches (15) angepaßt.

EP 0 143 154 A1

0143154

01.07.1983
34 196   G-die

Windmöller & Hölscher,
4540 Lengerich

**Vorrichtung zum Abstützen und Kalibrieren von
Folienschläuchen aus thermoplastischem Kunststoff**

Die Erfindung betrifft eine Vorrichtung zum Abstützen und Kalibrieren von Folienschläuchen aus thermoplastischem Kunststoff
mit den Folienschlauch von außen umschließenden ringförmigen
Stützelementen.

Bei einer aus der DE-PS 20 04 881 bekannten Vorrichtung dieser
Art bestehen die Stützelemente aus einzelnen gekrümmten stangenförmigen Stützsegmenten, die zur Verminderung der Reibung mit
dem zu kalibrierenden Folienschlauch mit einem drehbaren Belag,
üblicherweise Teflonröllchen, versehen sind. Bei hohen Abzugsgeschwindigkeiten und entsprechend großen Kühlluftmengen können
jedoch aufgrund der Berührung zwischen den Teflonröllchen oder
dergleichen und dem Folienschlauch Markierungen auf diesem entstehen. Derartige Markierungen können bei niedrigeren Abzugsgeschwindigkeiten vermieden werden, weil die mit Röllchen besetzten Stützsegmente dann unmittelbar oberhalb der Frostlinie
angeordnet werden können. Bei hohen Abzugsgeschwindigkeiten läßt
sich die Lage der Frostlinie nicht mehr genügend genau bestimmen, so daß sich sodann eine sogenannte Frostzone ausbildet,
die über den Bereich der Stützsegmente hinausreicht.

Aus dem frisch extrudierten Folienschlauch dampfen wachsartige
Bestandteile aus, die sich teilweise auf den die Röllchenachsen
bildenden Stützsegmenten absetzen, so daß die einzelnen Röllchen
nur gegen einen sich erhöhenden Widerstand drehbar sind. Da die
Röllchen durch Mitnahme von dem Folienschlauch angetrieben sind,
können bei hohen Abzugsgeschwindigkeiten sogenannte Pumpbewegungen des Folienschlauches angeregt werden, die sich aus den
unterschiedlichen Reibungswiderständen der einzelnen Röllchen
ergeben. Dies hat insgesamt eine schlechtere Regelmöglichkeit
sowie eine schlechtere Oberflächenstruktur der Folie zur Folge.

Aufgabe der Erfindung ist es daher, zur Vermeidung von Rückwirkungen auf die Schlauchfolie eine diese nicht berührende
Abstütz- und Kalibriervorrichtung der eingangs angegebenen Art
zu schaffen.

Erfindungsgemäß wird diese Aufgabe dadurch gelöst, daß die
Stützelemente aus U-förmigen, mit nach innen offenen Ringkanälen
versehenen Ringen bestehen, die Anschlüsse zum Zuführen von
Kühlluft aufweisen, und daß der Durchmesser der inneren Ränder
der seitlich den Ringkanal begrenzenden Flanken der Ringe dem
zu kalibrierenden Durchmesser des Folienschlauches angepaßt ist.
In den bzw. die Ringkanäle wird eine derartige Luftmenge eingeblasen, daß die über die inneren Ränder der seitlichen Flanken
abströmende Luft ein den abgezogenen Folienschlauch abstützendes
Polster bildet. Dadurch ist sichergestellt, daß der abgezogene Folienschlauch mit den kalibrierenden Ringen nicht in Berührung kommt. Die zur Bildung der Stützpolster eingeblasene Luft hat zusätzlich den Vorteil, daß der Folienschlauch weiter abgekühlt wird.

Es ist wünschenswert, die kalibrierenden Stützelemente auf unterschiedliche Folienschlauchdurchmesser einstellen zu können. Nach einer erfinderischen Weiterbildung ist daher vorgesehen, daß die den Ringkanal begrenzenden seitlichen Flanken mit Irisblenden verbunden sind, die in einstellbarer Weise den Durchtrittsquerschnitt der Flanken verengen. Derartige Irisblenden sind bekannt und können im Handel erworben werden, so daß diese hier nicht näher beschrieben werden.

Ein über den Umfang der Flanken gleichmäßiges Stützpolster aus Blasluft wird erreicht, wenn der Luftdruck über den Umfang des Ringkanals möglichst gleich ist. In weiterer Ausgestaltung der Erfindung ist der Ringkanal daher durch ein siebartig gelochtes Blech in Form eines zylindrischen Ringes geschlossen, das im Endbereich der Flanken zwischen diesen angeordnet ist. Weiterhin können in dem Ringkanal zur Vergleichmäßigung der Luftströmung und des Luftdrucks Prall- und/oder Leitbleche angeordnet sein.

Zweckmäßigerweise sind im Aufweitungsbereich bzw. in dem aufgeweiteten Bereich des Folienschlauches mehrere Ringe im Abstand voneinander übereinander angeordnet.

Ein Ausführungsbeispiel der Erfindung wird nachstehend anhand der Zeichnung näher erläutert. In dieser zeigt

Fig. 1        eine perspektivische Ansicht eines Axialschnitts eines Kalibrierringes und

Fig. 2      einen Axialschnitt durch vier übereinander
            angeordnete Kalibrierringe.

Jeder Kalibrierring 1 besteht aus einem Ring 2 mit U-förmigem
Profil, dessen Schenkel 3, 4 die Flanken eines Ringkanals 5 bilden, der nach innen hin durch ein siebartig mit Löchern versehenes zylinderringförmiges Blech 6 geschlossen ist, das an den
Stirnseiten der Schenkel 3, 4 oder im Endbereich der Schenkel
zwischen diesen befestigt ist. Das zylinderringförmige Stegteil
des profilierten Ringes 2 ist in gleichmäßigen Abständen mit
mehreren Anschlußstutzen 7 zur Zuführung von Kühlluft versehen.
Durch diese Anschlußstutzen 7 wird Kühlluft in den Ringkanal 5
eingeblasen. Die Kühlluft wird in dem Ringkanal 5 durch in
geeigneter Weise angebrachte Luftleitbleche 9 derart verteilt,
daß sie gleichmäßig aus den Sieblöchern des zylinderringförmigen
Bleches 6 austritt.

Auf die unteren und oberen Schenkel 3, 4 des profilierten Rings
2 sind Irisblenden 10, 11 aufgeschraubt, die durch ihre Stirnkanten 13, 14 den Durchtrittsquerschnitt verengen. Die Irisblenden 10, 11 sind handelsüblicher Art und werden daher nicht näher
beschrieben. Die durch die Irisblenden 10, 11 begrenzten Durchtrittsquerschnitte lassen sich stufenlos ändern und somit dem
gewünschten Durchmesser der Schlauchfolie 15 anpassen.

Die durch die Luftanschlüsse 7 eingeblasene Kühlluft tritt durch
die Sieböffnungen in einen Ringraum, der durch das zylinderringförmige Siebblech 6 und die Lippen 17, 18 der Irisblenden 10, 11
gebildet wird. Aus diesem Ringraum tritt die Kühlluft unter Bildung eines Stützpolsters über die Kanten 13, 14 der Lippen 17,
18 der Irisblenden aus und stützt den Folienschlauch 15 ab. Die
Kühlluft quetscht sich gleichsam durch sich zwischen den Kanten 13, 14 und dem Folienschlauch ausbildende schmale Spalte hindurch und verhindert so unter Kalibrierung des Folienschlauches deren Berührung mit den Kalibrierringen 1.

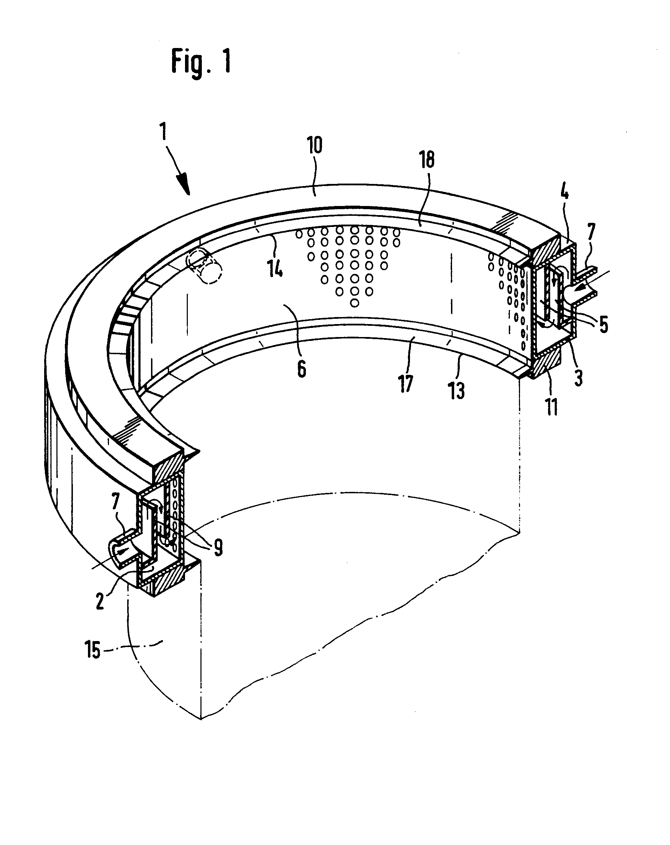

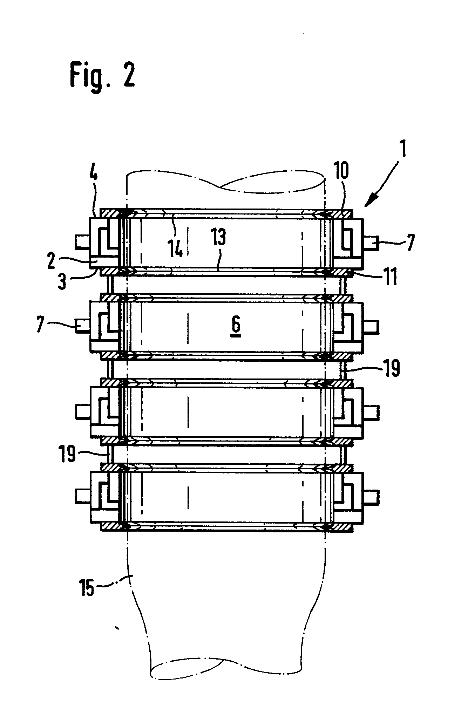

Bei dem Ausführungsbeispiel nach Fig. 2 sind vier Kalibrierringe der anhand der Fig. 1 erläuterten Art im Abstand übereinander angeordnet und durch Stehbolzen 19 miteinander in der Weise verbunden, daß zwischen den einzelnen Kalibrierringen ausreichende Spalte zum Abströmen der Kühl- und Stützluft gebildet sind.

0143154

01.07.1983
34 196 G-die

Windmöller & Hölscher,
4540 Lengerich

---

**Vorrichtung zum Abstützen und Kalibrieren von
Folienschläuchen aus thermoplastischem Kunststoff**

---

**Patentansprüche:**

1. Vorrichtung zum Abstützen und Kalibrieren von Folienschläuchen aus thermoplastischem Kunststoff mit den
Folienschlauch von außen umschließenden ringförmigen
Stützelementen, **dadurch gekennzeichnet,** daß die Stützelemente aus U-förmigen, mit nach innen offenen Ringkanälen
(5) versehenen Ringen (2) bestehen, die Anschlüsse (7) zum
Zuführen von Kühlluft aufweisen, und daß der Durchmesser
der inneren Ränder (13, 14) der seitlich den Ringkanal (5)
begrenzenden Flanken (3, 4) der Ringe (2) dem zu kalibrierenden Durchmesser des Folienschlauches (15) angepaßt ist.

2. Vorrichtung nach Anspruch 1, dadurch gekennzeichnet, daß die den Ringkanal (5) begrenzenden seitlichen Flanken (3, 4) mit Irisblenden (10, 11) verbunden sind, die in einstellbarer Weise den Durchtrittsquerschnitt der Flanken verengen.

3. Vorrichtung nach Anspruch 1 oder 2, dadurch gekennzeichnet, daß der Ringkanal (3) durch ein siebartig gelochtes Blech (6) in Form eines zylindrischen Ringes geschlossen ist, das im Endbereich der Flanken (3, 4) zwischen diesen angeordnet ist.

4. Vorrichtung nach einem der Ansprüche 1 bis 3, dadurch gekennzeichnet, daß in dem Ringkanal zur Vergleichmäßigung der Luftströmung und des Luftdrucks Prall- und/oder Leitbleche (9) angeordnet sind.

5. Vorrichtung nach einem der Ansprüche 1 bis 4, dadurch gekennzeichnet, daß im Aufweitungsbereich bzw. im aufgeweiteten Bereich des Folienschlauches (15) mehrere Ringe (1) im Abstand voneinander übereinander angeordnet sind.

Fig. 1

0143154

**Fig. 2**

## EINSCHLÄGIGE DOKUMENTE

EP 84106276.3

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | EP - A2 - 0 077 661 (NIPPON UNICAR) <br> * Gesamt * <br> -- | 1,2,4 | B 29 D 7/02 |
| X | US - A - 3 507 006 (PRINCEN) <br> * Gesamt * <br> -- | 1,4 | |
| X | JP - A2 - 58-81 128 (MITSUI) <br><br> * Gesamt * | 1,2,4,5 | |
| X,P | & DE - A1 - 3 241 192 <br> -- | | |
| X | DE - A1 - 2 801 406 (MOBIL OIL) <br> * Gesamt * <br> -- | 1,3,5 | |
| X | DE - A1 - 2 510 804 (MOBIL OIL) <br> * Gesamt * <br> -- | 1,3,5 | RECHERCHIERTE SACHGEBIETE (Int. Cl. 3) <br><br> B 29 D |
| A | DE - B - 1 196 850 (BASF) <br> * Gesamt * <br> -- | 1,3 | |
| A | DE - A - 2 340 398 (I.C.I) <br> * Gesamt * <br> -- | 1,3 | |
| A | DE - B - 1 778 959 (SHELL) <br> * Gesamt * <br> --- - | | |

Der vorliegende Recherchenbericht wurde für alle Patentansprüche erstellt.

| Recherchenort <br> WIEN | Abschlußdatum der Recherche <br> 23-11 1984 | Prüfer <br> MAYER |
|---|---|---|